(19) Europäisches Patentamt
European Patent Office
Office européen des brevets

(11) **EP 4 266 261 A1**

(12) **EUROPEAN PATENT APPLICATION**

(43) Date of publication:
25.10.2023 Bulletin 2023/43

(21) Application number: 22169510.9

(22) Date of filing: 22.04.2022

(51) International Patent Classification (IPC):
*G06V 10/774* (2022.01)    *G06V 20/58* (2022.01)
*G06V 20/56* (2022.01)    *G06V 20/64* (2022.01)
*G06V 10/80* (2022.01)

(52) Cooperative Patent Classification (CPC):
G06V 20/58; G06V 10/774; G06V 10/809;
G06V 20/588; G06V 20/647

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Zenseact AB
417 56 Göteborg (SE)

(72) Inventors:
• ALIBEIGI, Mina
417 65 Göteborg (SE)
• TOFT, Carl
41460 Göteborg (SE)
• HANER, Sebastian
226 47 Lund (SE)

(74) Representative: Zacco Sweden AB
P.O. Box 5581
Löjtnantsgatan 21
114 85 Stockholm (SE)

(54) **3D ROAD SURFACE ESTIMATION FOR AUTOMATED DRIVING SYSTEMS**

(57) A method and related aspects for generating 3D detections on a road portion are disclosed. The method comprises obtaining an image from a monocular camera arranged on a vehicle having an Automated Driving System (ADS), where the image depicts the road portion. The method further comprises processing the obtained image using a 3D road shape module having a first trained machine learning model, where the 3D road shape module is configured to output a depth map of the road portion. Furthermore, the method comprises processing the obtained image using a 2D feature detection module having a second trained machine learning model. The 2D feature detection module is configured to detect one or more features on the road portion in a 2D image plane of the obtained image, and to output an image indicative of the detected one or more features. The method further comprises determining the 3D positions of the one or more detected features on the road portion based on the depth map and the image indicative of the detected one or more features.

Fig. 6

**EP 4 266 261 A1**

**Description**

TECHNICAL FIELD

The present invention relates to the field of Automated Driving Systems, and in particular to methods and systems for generating Three-Dimensional (3D) detections on a road portion.

BACKGROUND

During the last few years, the research and development activities related to autonomous vehicles have exploded in number and many different approaches are being explored. An increasing portion of modern vehicles has advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated with both the ADAS and the Autonomous Driving (AD) field. ADAS and AD will herein be referred to under the common term Automated Driving System (ADS) corresponding to all of the different levels of automation as for example defined by the SAE J3016 levels (0-5) of driving automation, and in particular for level 4 and 5.

In the not-too-distant future, ADS solutions are expected to have found their way into a majority of the new cars being put on the market. An ADS may be construed as a complex combination of various components that can be defined as systems where perception, decision making, and operation of the vehicle are performed by electronics and machinery instead of a human driver, and as introduction of automation into road traffic. This includes handling of the vehicle, and destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

Lane detection is employed in various ADS features, such as Adaptive Cruise Control (ACC), Lane Departure Warning (LDW), and Lane Change Assist (LCA), aside from being a necessary function for fully autonomous vehicles. There are two main approaches to lane detection (may also be referred to as lane marker detection or lane boundary detection). One approach involves the determination of the vehicle's position relative to the lanes (lane markers), which can be computed by using maps created offline and by monitoring the vehicle's position on the map. The other approach relies on the use of the on-board sensors (e.g. monocular cameras), which can allow for detecting lanes during run-time without relying on any offline created map. The first approach (offline approach) to lane detection may for example be accomplished by combining GPS data, Inertial Measurement Unit (IMU) data, and an HD-map. However, the reliability and accuracy of such approaches have been questioned and a run-time approach is likely to be needed for any fully autonomous solutions.

There is a need in the art for new and improved lane detection solutions for ADS-equipped vehicles, which provide reliable and accurate lane detections during run-time and which can be developed/trained in a cost-effective manner.

SUMMARY

It is therefore an object of the present invention to provide a method for generating 3D detections on a road portion, a computer-readable storage medium, a system, and a vehicle, which alleviate all or at least some of the drawbacks of presently known methods and systems.

This object is achieved by means of a method for generating 3D detections on a road portion, a computer-readable storage medium, a system, and a vehicle as defined in the appended independent claims.

According to some embodiments, there is provided a method for generating 3D detections on a road portion. The method comprises obtaining an image from a monocular camera arranged on a vehicle having an Automated Driving System (ADS), where the image depicts the road portion. The method further comprises processing the obtained image using a 3D road shape module having a first trained machine learning model, where the 3D road shape module is configured to output a depth map of the road portion. Furthermore, the method comprises processing the obtained image using a 2D feature detection module having a second trained machine learning model. The 2D feature detection module is configured to detect one or more features on the road portion in a 2D image plane of the obtained image, and to output an image indicative of the detected one or more features. The method further comprises determining 3D positions of the one or more detected features on the road portion based on the depth map and the image indicative of the detected one or more features.

According to some embodiments, there is provided a computer program product comprising instructions which, when the computer program is executed by a processing system, causes the processing system to carry out the method according to any one of the embodiments disclosed herein.

According to some embodiments, there is provided a (non-transitory) computer-readable storage medium comprising instructions which, when executed by a computing device, causes the computing device to carry out the method according to any one of the embodiments disclosed herein.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to some embodiments, there is provided a system for generating 3D detections on a road portion. The system comprises control circuitry configured to obtain an image from a monocular camera arranged on a vehicle having an Automated Driving System (ADS), where the image depicts the road portion. The control circuitry is further configured to process the obtained image using a 3D road shape module having a first trained machine learning model, where the 3D road shape module is configured to output a depth map of the road portion. The control circuitry is further configured to process the obtained image using a 2D feature detection module having a second trained machine learning model. The 2D feature detection module is configured to detect one or more features on the road portion in a 2D image plane of the obtained image, and to output an image indicative of the detected one or more features. Furthermore, the control circuitry is configured to determine 3D positions of the one or more detected features on the road portion based on the depth map and the image indicative of the detected one or more features.

According to some embodiments, there is provided a vehicle comprising an Automated Driving System (ADS) for controlling the vehicle, a monocular camera configured to capture images of a surrounding environment of the vehicle, and a system for generating 3D detections on a road portion according to any one of the embodiments disclosed herein.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

An advantage of some embodiments is that it is possible to produce accurate and reliable 3D detections on a road portion without the need for ground-truth 3D lane lines for training the underlying machine learning models.

An advantage of some embodiments is that the training data for the machine-learning model of the 3D road shape module can be generated in an automated and cost-effective manner.

An advantage of some embodiments is that it is possible to obtain a 3D estimate of the road in front of the vehicle even in the absence of visible lane markers.

These and other features and advantages of the present invention will in the following be further clarified with reference to the embodiments described hereinafter.

BRIEF DESCRIPTION OF THE DRAWINGS

Further objects, features and advantages of embodiments of the invention will appear from the following detailed description, reference being made to the accompanying drawings, in which:

Fig. 1 is a schematic flowchart representation of a method for generating 3D detections on a road portion in accordance with some embodiments.

Fig. 2 is a schematic flowchart representation of a sub-process of a method for generating 3D detections on a road portion in accordance with some embodiments.

Fig. 3 is a schematic illustration depicting a process for generating ground truth height-map images for training a machine-learning model of a 3D road shape module in accordance with some embodiments.

Fig. 4 is a schematic flowchart representation of a sub-process of a method for generating 3D detections on a road portion in accordance with some embodiments.

Fig. 5 is a schematic illustration of a variational autoencoder of a 3D road shape module in accordance with some embodiments.

Fig. 6 is a schematic block diagram representation of a system for generating 3D detections on a road portion in accordance with some embodiments.

Fig. 7 is a schematic side-view illustration of a vehicle comprising a system for generating 3D detections on a road portion in accordance with some embodiments.

DETAILED DESCRIPTION

In the following detailed description, embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.
Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), Field Programmable Gate Arrays (FPGA) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

*Overview*

As mentioned in the foregoing, conventional lane detection systems are based on perception data from monocular cameras. However, the majority of these "camera-based" lane detection systems treat the problem as a Two-Dimensional (2D) task in the image plane. In more detail, these systems detect lanes or lane markers by feeding an image, e.g. captured by a monocular camera mounted on the vehicle, through a deep neural network (DNN) that has been trained to find the pixels in an image that correspond to a lane, and then uses some suitable method of lane model fitting to create lane instances from the detected pixels.
However, in general the systems responsible for path-planning and control for ADS-equipped vehicles, require information about the positions and geometry of the lanes in a "top-down" view (i.e. birds-eye view) of the scene surrounding the car. Therefore, as a remedy to this, some lane detection systems, and after the lane detections have been made in the image, project the lanes in the image to 3D coordinates under a "flat earth" assumption with the knowledge of the mounting position of the camera relative to the ground. However, such methods may struggle with drawbacks in terms of providing inaccurate estimates of the 3D position of the lanes (or the lane markers) when the road is "hilly", "banked" or "curvy", even if each pixel in the image is classified correctly.
To overcome the shortcomings associated with the flat earth assumption, some lane detection systems attempt to directly address 3D lane detection using input data in the form of images from a monocular camera. These end-to-end data-driven approaches are capable of generalizing the lane detection problem for complex structures (e.g. urban environments, splits, merges, intersections) without making any geometric assumption about the number or the topology of the lanes. Moreover, these end-to-end data-driven approaches do not need any post-processing step as they unify the image encoding, image-to-world correspondence, and the lane model fitting steps. However, like many data-driven approaches, these models must be trained on vast amounts of annotated data, in this case in the form of annotated 3D lanes. These 3D lane annotations are very expensive in comparison to 2D lane annotations, and generating 3D information and connectivity for image features using manual annotations can be difficult and error-prone.
Therefore, in accordance with some embodiments, it is here proposed that instead of estimating the lanes in an end-to-end approach in a 3D world coordinate system, one instead produces an estimate of the 3D geometry of the ground surface on a road portion in the surrounding environment of the vehicle. In more detail, one or more images that are captured by a vehicle-mounted monocular camera are fed through a machine-learning model (e.g. a deep neural network) that has been trained for this ground surface prediction task. In particular, the machine-learning model may be configured to regress a set of parameters that parametrize the road surface in front of the camera. This estimate of the 3D geometry of the ground surface of the road portion is then combined with an image comprising detections of one or more features to get an estimate of the 3D geometry of these one or more features on the ground surface of the road portion.

In short, some embodiments utilize a parallel architecture where an image from a vehicle-mounted monocular camera is fed through a 3D road shape module and a 2D feature detection module in parallel, each of the modules having their respective machine-learning models to output a depth map and an image comprising the detected lane instances. These two outputs are then used to compute the 3D positions of the features on the road portion. Thereby it is possible to generate accurate and reliable 3D detections of various features on a road portion (such as e.g. lane markers) in run-time, without the need for ground-truth 3D lane lines for training the underlying machine learning models, which is a requirement for the above-mentioned end-to-end 3D lane estimation.

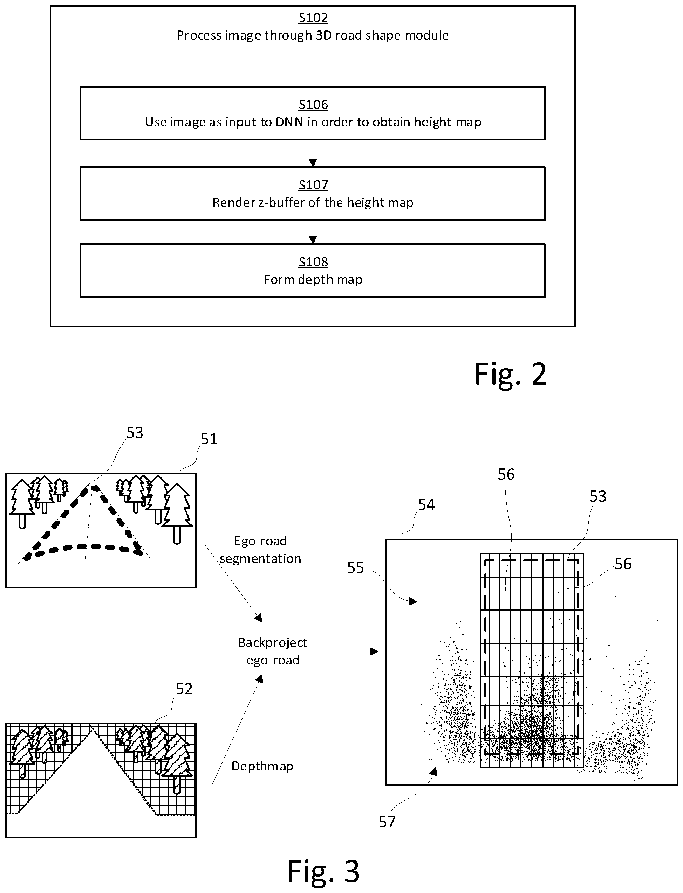

The training data needed for the machine learning models of the methods and systems disclosed herein may for example be in the form of images with road annotations and accumulated LiDAR depth maps, which are readily obtained by running a conventional LiDAR Simultaneous Localization and Mapping (SLAM) system. However, details related to the training data generation are further elaborated upon in reference to Fig. 3.

*Embodiments*

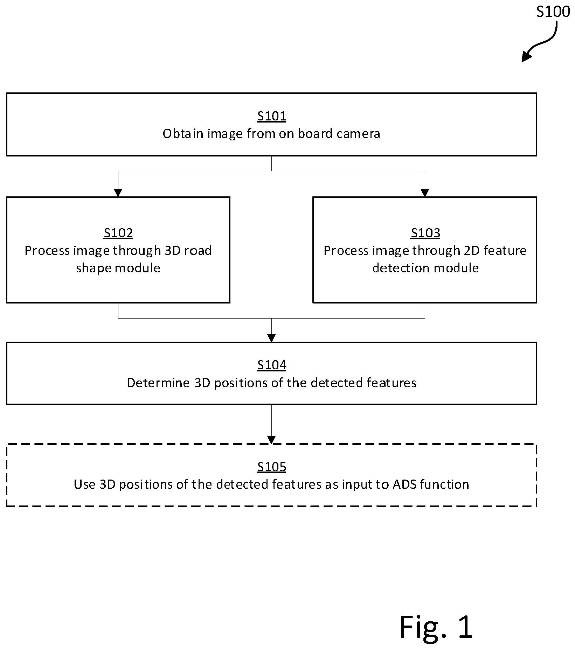

Fig. 1 is a schematic flowchart representation of a (computer-implemented) method S100 for generating/producing 3D detections on a road portion, or more specifically 3D detections of features on the road surface of the road portion, in accordance with some embodiments. In particular, the method S100 is suitably performed by a processing system for generating/producing 3D detections for a vehicle traveling on a road portion in accordance with some embodiments. Even though the present disclosure may focus on feature detection in the form of lane detections, it should be noted that the herein proposed methods and systems can be used for other similar applications such as free-space estimations, object detections, road edge detections, and so forth, as readily appreciated by the person skilled in the art. A vehicle may in the present context be understood as a road vehicle such as a car, a bus, a truck, or the like.

Free-space areas may in the present context be understood as areas in the surrounding environment of the vehicle (may also be referred to as ego vehicle) absent of objects (e.g. other vehicles, pedestrians, barriers, animals, bicycles, static objects, etc.). Thus, the predicted location of free-space areas may be understood as estimates of areas absent of external objects (static and dynamic objects), and optionally an estimate of the uncertainty of this determination, i.e. the likelihood of the determined location of the free-space area actually being true. One can consider an estimation of "drivable area" in an analogous fashion, where in addition to the estimation of areas absent of objects (as in the case of free space) the estimation also includes the presence of a road surface.

The method S100 comprises obtaining S101 an image from a monocular camera arranged on a vehicle having an Automated Driving System (ADS). The obtained S101 accordingly depicts the road portion that the vehicle is traveling upon, and may for example be in the form of a forward-facing camera facing the road portion in front of the vehicle. The term obtaining is herein to be interpreted broadly and encompasses receiving, retrieving, collecting, acquiring, and so forth.

Further, the method S100 comprises processing S102 the obtained S101 image by means of a 3D shape road module having a first trained machine learning model. The 3D road shape module is configured to output a depth map of the road portion. A depth map may be understood as an image or image channel that contains information relating to the distance of the surfaces to scene objects/features (e.g. lane markers) from a viewpoint (e.g. from the vehicle-mounted camera's position).

The first trained machine learning model may be in the form of a trained deep neural network (DNN) configured to output a parametrized 3D road surface representation in the form of a height map based on the obtained S101 image. Alternatively, the first trained machine learning model may be in the form of a trained Variational Autoencoder (VAE) configured to output the depth map of the road portion based on the obtained image S101.

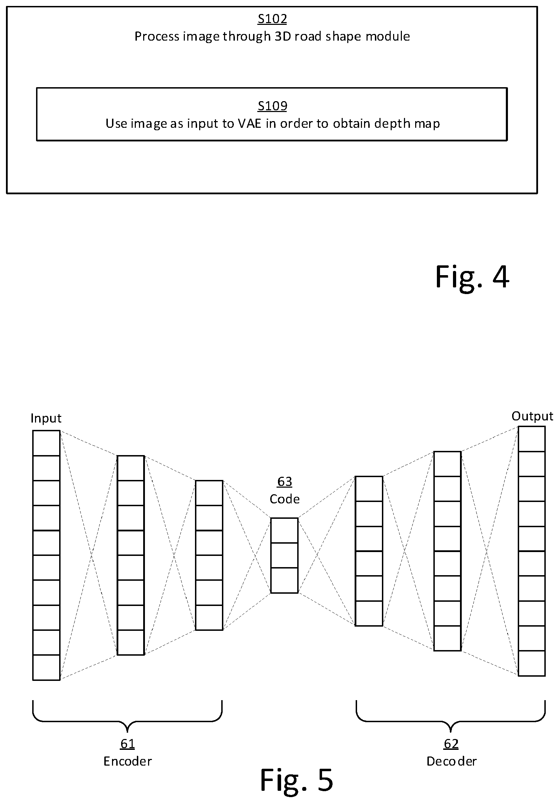

In the former example embodiment, the road surface may be parameterized as a height map, where a horizontal grid is thought to lie in front of the vehicle, and the height above each cell in this grid is estimated by the trained deep neural network. In the latter example embodiment, i.e. the variational auto-encoder, no explicit parametrization of the road surface is assumed. The VAE is instead trained to compute the best shape parametrization for the road surface. In more detail, the VAE is trained to predict a "road surface-only" depth map from one or more input images by first projecting it onto a low-dimensional latent embedding space which is "learned" during the training to minimize the depth map reconstruction error. Further details related to these example embodiments are discussed in reference to Fig. 2 and Fig. 4 below.

Moreover, the method S100 comprises processing S103 the obtained image using a 2D feature detection module having a second trained machine learning model. The 2D feature detection module is configured to detect one or more features on the road portion in a 2D image plane of the obtained image, and to output an image indicative of the detected one or more features. For example, the 2D feature detection module may be configured to mark the presence of a feature, such as a lane marker, road edge, and/or free-space, and so forth, through pixel-wise masks generated for each feature in the image (i.e. semantic segmentation or instance segmentation). Accordingly, in some embodiments, the second trained machine learning model is configured to, for each pixel in the obtained image, predict if the pixel corresponds to the one or more features or not.

The method S100 further comprises determining S104 3D positions of the one or more detected features on the road portion (or on the road surface) based on the depth map and the image indicative of the detected one or more features. In other words, the outputs from the 3D road shape module and the 2D feature detection module are used to compute S104 the 3D positions of the one or more detected features of the road surface or road portion.

The 3D positions of the one or more detected features on the road portion may be understood as a geometrical representation of the detected features in a 3D space in reference to a 3D coordinate system of the vehicle or a global coordinate system. The 3D positions of the one or more detected features on the road portion may for example be in the form of geometrical extensions (e.g. width, length, height, center position) of the detected features in a 3D coordinate system. Thus, if the features are lane markers on the road surface, the 3D positions of the lane markers comprise the shape and position of the detected lane markers in a 3D space. In some embodiments, the step of determining S104 3D positions of the one or more detected features on the road portion further comprises generating a top-view (or birds-eye view) representation of the 3D positions of the one or more detected features on the road portion.

In some embodiments, the depth map is an image having the same pixel resolution as the obtained S101 image, wherein the depth image comprises a prediction of a depth value at a plurality of pixels, each of the plurality of pixels having a corresponding pixel in the obtained image. The depth value may accordingly be understood as a predicted distance to the surface that the pixel represents from a viewpoint. Accordingly, the step of determining S104 the 3D positions of the one or more detected features on the road portion may comprise determining the depth value of the one or more features based on the depth value of the pixels corresponding to the pixels that are predicted to correspond to the one or more features.

Further, the method S100 comprises using S105 the determined S104 3D position of the one or more detected features on the road portion/surface as input for an ADS function configured to control the vehicle. The ADS function may for example be a path planning system, a trajectory planning system, a lane support system (e.g. a lane keeping assist system, a lane departure warning system, etc.), a collision avoidance module, or any other suitable ADS function configured to use the determined S104 3D position of the one or more detected features as input. In some embodiments, the method S101 comprises providing the determined S104 3D positions of the one or more detected features on the road portion as input for an ADS function. For example, the ADS function may be a path planning module/system of the ADS that generates a target path or trajectory for the vehicle 1 based on the provided input, and then supplies the target path/trajectory to a decision and control module of the ADS that is configured to maneuver the vehicle in accordance with the generated target path/trajectory.

Fig. 2 is a schematic flowchart representation of the step of processing S102 the obtained image using a 3D road shape module having a trained machine learning model, where the 3D road shape module is configured to output a depth map of the road portion in accordance with some embodiments. In more detail, Fig. 2 represents a method for processing S102 the obtained image using a 3D road shape module having a trained machine learning model in the form of a trained deep neural network configured to output a parametrized 3D road surface representation in the form of a height map based on the obtained S101 image.

In more detail, in some embodiments, the first trained machine learning model is a trained deep neural network configured to output a parametrized 3D road surface representation in the form of a height map based on the obtained S101 image. Accordingly, the processing S102 of the obtained image using the 3D road shape module may comprise processing S106 the obtained image using the trained deep neural network in order to obtain a height map of the road portion. In some embodiments, the road surface of the road portion is parametrized as a height map, where an imaginary/virtual horizontal grid is applied so to lie in front of the vehicle, and the height above each cell in this grid is estimated by the trained deep neural network.

Further, a z-buffer of the height map of the road portion may be rendered S107 based on a position and orientation of the monocular camera relative to the height map of the road portion, and a depth map is formed S108 based on the rendered S107 z-buffer.

Z-buffering, also known as depth buffering, may be understood as a technique in computer graphics programming that is used to determine whether an object (or part of an object) is visible in a scene. Thus, a z-buffer, is a type of data buffer used in computer graphics to represent depth information of objects in 3D space from a particular perspective, in the present case it is from the perspective of the vehicle-mounted monocular camera. In other words, given a height map, it is possible to create an estimated depth map from the height map by simply rendering the z-buffer of the height map from the known position and orientation of the camera relative to the height map. This produces an image where the value at each pixel contains the corresponding depth.

In short, in some embodiments, the first trained machine learning model is a trained deep neural network that is trained to take a monocular (RGB) image as input and to output an estimate of the road surface of the road portion in 3D. In more detail, the trained deep neural network may be configured to predict the height of the road above a set of points placed in a (virtual) horizontal grid in the local coordinate frame of the monocular camera.

The deep neural network may be trained offline in a fully supervised manner. For the training process, one may

6

utilize a training dataset comprising a set of monocular camera images (e.g. RGB images), ground truth images or target images in the form of height maps. The training dataset may be pre-collected from dedicated test-vehicles or from production vehicles equipped with the necessary sensory system. During training, the deep neural network is trained to accurately predict the height map when given a monocular camera image as input.

Fig. 3 schematically illustrates a process for obtaining the ground truth height map 54 images for each monocular camera image 51 in the training dataset. In more detail, for each monocular camera image 51 in the training dataset, a ground truth height map is created/generated from a corresponding LiDAR depth map 52 and an ego-road annotation 53 within each monocular camera image 51. The ego-road annotation 53 provides information about which parts of the image 51 (and consequently information about which parts of the depth map 52) that correspond to the road portion. Then, by using the known camera calibration parameters/data, the parts of the depth map 52 that represent the road portion can be back-projected into a point cloud 57 in 3D. Even though the present description focuses on depth maps 52 in the form of LiDAR depth maps, the skilled person readily understands that a radar depth maps from advanced radar technologies may be applied in an analogous and equivalent manner.

Camera calibration parameters may be understood as the parameters used in a camera model to describe the mathematical relationship between the 3D coordinates of a point in the scene from which the light comes from and the 2D coordinates of its projection onto the image plane. The intrinsic parameters, also known as internal parameters, are the parameters intrinsic to the camera itself, such as the focal length and lens distortion. The extrinsic parameters, also known as external parameters or camera pose, are the parameters used to describe the transformation between the camera and its external world.

Further, in order to facilitate the training of the neural network, a (fixed) horizontal grid 55 in the local coordinate frame of the monocular camera is provided so that the average or median height of the back-projected points 57 that fall within a cell 56 of the grid 55 can be used as the ground truth height of the height map for that grid point. The horizontal grid may for example be provided on a surface plane that the vehicle, onto which the camera is mounted, is positioned upon (i.e. the ground surface).

In some embodiments, the goal of the deep neural network during training is accordingly to estimate the height of the road surface of the road portion above the centre of each grid cell 56. The ground truth for each grid cell 56 is, as mentioned, set to the average or median height of all road points that fall within that cell.

Still further, the deep neural network may be trained using an optimization algorithm configured to minimize a loss function (cost function) that is used to calculate the model error (i.e. the difference between the ground truth and the output produced by the deep neural network). In other words, a loss function is utilized in order to update the weights and biases of the network. In some embodiments, a mean squared error (MSE) loss function is used.

Accordingly, in some embodiments, the loss for each training sample is the average squared error between the predicted height and ground-truth height over all cells 56 that contained at least one point after back-projecting the depth map 52. Accordingly, the cells 56 in the ground truth height map 54 that do not contain any points (originating from the depth map 52) do not affect the training loss:

$$loss = \frac{1}{M} \sum_{i,j} \left( h_{i,j} - \hat{h}_{i,j} \right)^2 m_{i,j} \tag{1}$$

Here, $h_{i,j}$ represents the ground-truth height value for cell (i, j) and $\hat{h}_{i,j}$ represents the deep neural network's predicted height value for cell (i, j). In order to be able to disregard the cells that do not contain any points, a binary mask $m_{i,j}$ is introduced, which has a value of 1 if cell (i, j) has a value in the ground truth height map 54, and a zero-value otherwise. The number M represents the total number of cells with height information in the ground truth height map 54:

$$M = \sum_{i,j} m_{i,j} \tag{2}$$

However, as the person skilled in the art realizes, an MSE loss function is merely one example out of a multitude of applicable loss functions that may be used to train the deep neural network, such as e.g. the average absolute error, or a robustified variant of any of these losses. These will for the sake of brevity and conciseness not be further elaborated upon herein.

Then, once the deep neural network has been trained to generate a height map based in an input in the form of a monocular camera image, the depth map is formed S108 from the rendered S107 z-buffer of the height map from the known position and orientation of the camera relative to the height map. The formed S108 depth map accordingly comprises an image where the value at each pixel that represents the road portion contains the corresponding depth value.

Moving on, Fig. 4 is a schematic flowchart representation of the step of processing S102 the obtained image using a 3D road shape module having a trained machine learning model, where the 3D road shape module is configured to output a depth map of the road portion in accordance with some embodiments. In more detail, Fig. 4 represents a method for processing S102 the obtained image using a 3D road shape module having a trained machine learning model in the form of a trained variational autoencoder (VAE) configured to output the depth map of the road portion based on the obtained image. Fig. 5 depicts a schematic representation of the variational autoencoder (VAE) of the 3D road shape module in accordance with some embodiments.

The VAE may comprise two parts, an encoder part 61 that maps the input image into a multi-dimensional latent vector, and a decoder part 62 that maps the multi-dimensional latent vector into a depth map image of the same (pixel) resolution as the input image. The depth value at each pixel in the depth map image is a prediction of the depth at the corresponding pixel in the original image. In some embodiments, the encoder part 61 may map the input image into a 16-dimensional latent vector, and the decoder part 62 may map the 16-dimensional latent vector into a depth image of the same (pixel) resolution as the input image.

The encoder part 61 comprises of a set of stacked residual blocks, each performing convolutions, batch-normalizations followed by a non-linearity. A final fully connected layer turns the feature-map into a latent vector. The decoder 62 comprises a set of residual blocks, where up-sampling may be performed between each block using bi-linear up-sampling and a transposed convolution.

In some embodiments, the road surface of the road portion is effectively parametrized by the n-dimensional latent vector (denoted code 63 in Fig. 5). Given these n numbers, it is possible to pass them through the decoder network to obtain the corresponding depth map for the road portion. These n numbers thus provide a detailed description of the 3D shape of the road portion captured by the vehicle-mounted monocular camera (e.g. the road portion in front of the vehicle). In more detail, the decoder interprets, or decodes, this latent vector into the actual depth map. However, the 3D shape of the road portion is already contained within these n numbers of the n-dimensional latent vector. The encoder, on the other hand, computes this latent vector from the input image, and is thus responsible for computing the road parametrization from the input image.

As mentioned in the foregoing, the VAE may be trained based on training data in the form of images with road annotations (ref. 51 in Fig. 3) and accumulated LiDAR depth maps (ref. 52 in Fig. 3). However, in contrast to the deep neural network trained to output a height map, there is no need to compute the ground truth height maps from the depth maps for the VAE. Instead, the depth maps may be used directly during the training of the VAE. In more detail, the monocular camera images are fed through the encoder to compute a latent vector (i.e. the n-dimensional road surface parametrization), which is then fed through the decoder to produce a predicted depth map for that image. This is then compared with the known ground truth depth map for that image.

Similar to the above-discussed trained deep neural network, the VAE can be trained in a fully supervised manner using an optimization algorithm configured to minimize a loss function (cost function) that is used to calculate the model error (i.e. the difference between the ground truth depth map and the output produced by the VAE). Thus, during training, the VAE may be penalized, for each training example, with the mean-squared error between the predicted depth and the ground truth depth over all pixels labelled as "ego-road" (see ref. 53 in Fig. 3)) according to a ground truth ego-road labelling supplied together with the ground-truth depth map.

Executable instructions for performing these functions are, optionally, included in a non-transitory computer-readable storage medium or other computer program product configured for execution by one or more processors.

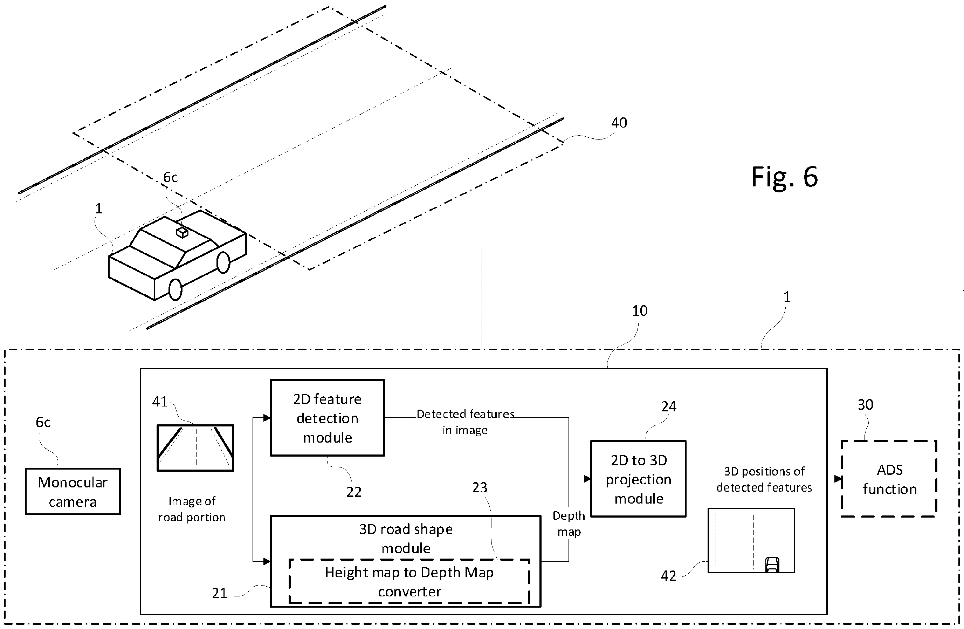

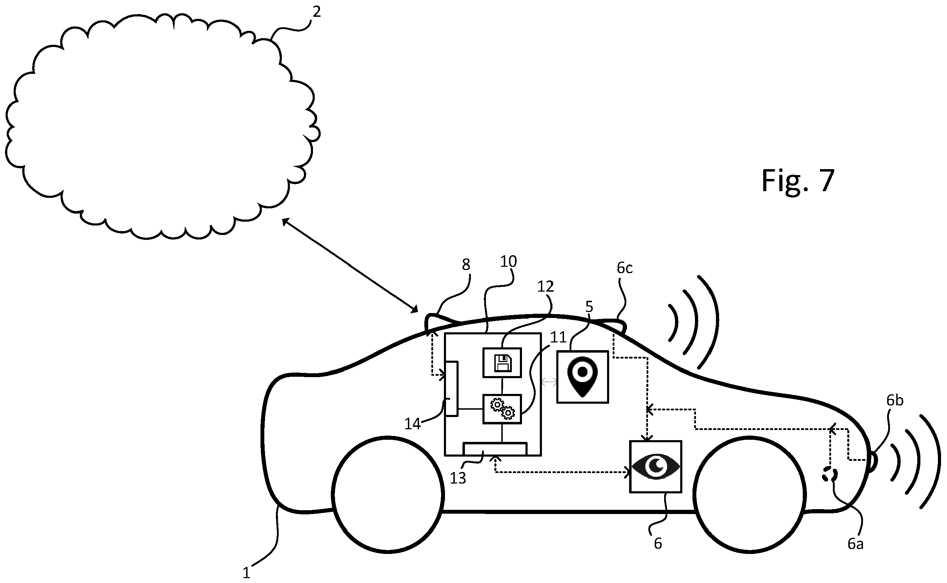

Fig. 6 is a schematic block diagram representation of a system 10 for generating 3D detections on a road portion in accordance with some embodiments, and in particular of a system 10 for generating 3D geometrical representations of one or more features on the road portion. Fig. 7 depicts a schematic side-view of a vehicle 1 comprising such a system 10.

In general, Fig. 6 depicts the flow of information from the vehicle-mounted monocular camera 6c generating the image depicting the road portion (in front of the vehicle 1), to the depth map generation, the road feature detection, and the subsequent output in the form of 3D positions of the one or more detected features on the road portion (e.g. lane markers on a road surface of the road portion). Accordingly, the system 10 comprises control circuitry 11 configured to perform the functions of the methods disclosed herein, where the functions may be included in a non-transitory computer-readable storage medium 12 or other computer program product configured for execution by the control circuitry 11. However, in order to better elucidate the present invention, the control circuitry 11 is provided with "modules" 21-24, in Fig. 6, each of them linked to one or more specific functions. The processing system may, in some embodiments, be comprised by a remote server, or realized as a distributed system (a so-called cloud computing system) comprising a plurality of such remote servers, assuming latency and bandwidth requirements for run-time operation are met. It should be noted that the system 10 may be implemented as a feature or function of the entire ADS platform of the vehicle 1, such as e.g. a sub-module of the ADS's perception system 6.

In short, an image captured by the camera 6c mounted on the vehicle 1 is fed in parallel through both the 3D road shape module 21 and the 2D feature detection module 22. The 3D road shape module computes an estimate of the parameters describing the 3D shape of the road (either by first computing a height map with a DNN and converting the height map to a depth map or by directly computing the depth map using a VAE). The 2D feature detection module estimates the positions in the image of the detected features, i.e. it estimates which pixels correspond to the detected features.

This information (depth map and positions of the features in the image provided by the camera 6c) is then used to compute the 3D positions of the detected features, e.g. by using a 2D to 3D projection module 24. In more detail, the 2D feature detection module 22 provides information about which pixels belong to the detected features in the image, and the depth map provide the depths of these pixels/points, so the 2D to 3D projection module computes the 3D positions of these features in a straightforward manner. The 3D positions of the features (i.e. the output of the system 10) may then be provided as an input any suitable ADS function 30 in need of this information, such as e.g. a path planning module of the ADS.

In more detail, the system 10 comprises control circuitry 11 configured to obtain an image from a monocular camera 6c arranged on a vehicle 1 having an Automated Driving System (ADS). The image accordingly depicts a road portion 40 in the vicinity of the vehicle 1, e.g. a road portion 40 in front of the vehicle 1. The control circuitry 11 is further configured to process the obtained image using a 3D road shape module 21 having a first trained machine learning model. More specifically, the 3D road shape module 21 is configured to output a depth map of the road portion 40.

Further, the control circuitry 11 is configured to process the obtained image using a 2D feature detection module 22 having a second trained machine learning model. More specifically, the 2D feature detection module 22 is configured to detect/predict one or more features on the road portion (e.g. lane markers, free-space, etc.) in a 2D image plane of the obtained image, and to output an image indicative of the detected one or more features. The output from the 2D feature detection module may comprise information about which pixels of the obtained image that correspond to the detected features. The control circuitry 11 is further configured to determine 3D positions of the one or more detected features on the road portion based on the depth map and the image indicative of the detected one or more features.

In some embodiments, the first trained machine learning model is a trained deep neural network (DNN) configured to output a parametrized 3D road surface representation in the form of a height map based on the obtained image. The control circuitry 11 may accordingly be configured to process the obtained image using the trained deep neural network in order to obtain a height map of the road portion 40. The control circuitry 11 may be further configured to render a z-buffer of the height map of the road portion based on a position and orientation of the camera 6c relative to the height map of the road portion 40, and form the depth map of the road portion 40 based on the rendered z-buffer.

In some embodiments, the first machine learning model is a trained Variational Autoencoder (VAE) configured to output the depth map of the road portion 40 based on the obtained image.

Moreover, in some embodiments, the control circuitry 11 is configured to provide the determined 3D positions of the one or more detected features on the road portion as input for an ADS function 30. The ADS function may for example be a path planning module/system of the ADS that generates a target path or trajectory for the vehicle 1 and supplies the target path/trajectory to a decision and control module of the ADS that is configured to manoeuvre the vehicle in accordance with the generated target path/trajectory.

The vehicle 1 may further comprise a perception system 6 or perception block 6, and a localization system 5. A perception system 6 is in the present context to be understood as a system responsible for acquiring raw sensor data from on-board sensors 6a, 6b, 6c such as cameras, LIDARs and RADARs, ultrasonic sensors, and converting this raw data into scene understanding. The localization system 5 is configured to monitor a geographical position and heading of the vehicle, and may be in the form of a Global Navigation Satellite System (GNSS), such as a GPS. However, the localization system may alternatively be realized as a Real Time Kinematics (RTK) GPS in order to improve accuracy.

In more detail, the perception system/block 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c comprised in and/or provided on-board the vehicle 1. The surrounding detecting sensors 6a-c may be represented by any arbitrary sensors adapted to sense and/or perceive the vehicle's 1 surroundings and/or whereabouts, and may e.g. refer to one or a combination of one or more of radar, LIDAR, sonar, camera, navigation system e.g. GPS, odometer and/or inertial measurement units.

Further, the vehicle 1 may be connected to external network(s) 2 via for instance a wireless link. The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 13 may also provide the possibility to acquire sensor data directly or via dedicated sensor control circuitry 6 in the vehicle. The communication/antenna interface 14 may further provide the possibility to send output to a remote location (e.g. remote operator or control center) by means of the antenna 5. Moreover, some sensors in the vehicle may communicate with the control device 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, images captured by the monocular camera may be sent to an external system and that system performs the steps to process the sensor data and to determine the 3D positions of the one or more detected features. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of processing the obtained image using the 3D road shape module and processing the obtained image using the 2D feature detection module may be interchanged based on a specific realization. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

**Claims**

1. A method (S100) for generating 3D detections on a road portion, the method (S100) comprising:

   obtaining (S101) an image from a monocular camera arranged on a vehicle having an Automated Driving System (ADS), wherein the image depicts the road portion;
   processing (S102) the obtained image using a 3D road shape module having a first trained machine learning model, the 3D road shape module being configured to output a depth map of the road portion;
   processing (S103) the obtained image using a 2D feature detection module having a second trained machine learning model, the 2D feature detection module being configured to detect one or more features on the road portion in a 2D image plane of the obtained image, and to output an image indicative of the detected one or more features;
   determining (S104) 3D positions of the one or more detected features on the road portion based on the depth map and the image indicative of the detected one or more features.

2. The method (S100) according to claim 1, wherein the second trained machine learning model is configured to detect lane markers on the road portion.

3. The method (S100) according to claim 1 or 2, wherein the second trained machine learning model is configured to detect free-space areas on the road portion.

4. The method (S100) according to any one of claims 1 - 3, wherein the second trained machine learning model is configured to, for each pixel in the obtained image, predict if the pixel corresponds to the one or more features or not.

5. The method (S100) according to any one of claims 1-4, wherein the depth map is a depth map image having the same pixel resolution as the obtained image, wherein the depth image comprises a prediction of a depth value at a plurality of pixels, each of the plurality of pixels having a corresponding pixel in the obtained image.

6. The method (S100) according to claim 5 when dependent on claim 4, wherein the step of determining (S104) the 3D positions of the one or more detected features on the road portion comprises determining the depth value of the one or more features based on the depth value of the pixels corresponding to the pixels that are predicted to correspond to the one or more features.

7. The method (S100) according to any one of claims 1- 6, further comprising:
   using (S105) the determined 3D positions of the one or more detected features on the road portion as input for an ADS function configured to control the vehicle.

8. The method (S100) according to claim 7, wherein the ADS function is one of:

   a path planning module;
   a trajectory planning module;
   a lane support system; and
   a collision avoidance module.

9. The method (S100) according to any one of claims 1-8, wherein the first trained machine learning model is a trained deep neural network configured to output a parametrized 3D road surface representation in the form of a height map based on the obtained image;
   wherein the processing (S102) of the obtained image using the 3D road shape module comprises:

   processing (S106) the obtained image using the trained deep neural network in order to obtain a height map of the road portion;
   rendering (S107) a z-buffer of the height map of the road portion based on a position and orientation of the camera relative to the height map of the road portion; and

forming (S108) the depth map of the road portion based on the rendered z-buffer.

**10.** The method (S100) according to any one of claims 1 - 8, wherein the first machine learning model is a trained Variational Autoencoder (VAE) configured to output the depth map of the road portion based on the obtained image.

**11.** A computer-readable storage medium comprising instructions which, when executed by a computing device, causes the computing device to carry out the method (S100) according to any one of the preceding claims.

**12.** A system (10) for generating 3D detections on a road portion, the system comprising control circuitry (11) configured to:

obtain an image from a monocular camera (6c) arranged on a vehicle having an Automated Driving System (ADS), wherein the image depicts the road portion;

process the obtained image using a 3D road shape module (21) having a first trained machine learning model, the 3D road shape module being configured to output a depth map of the road portion;

process the obtained image using a 2D feature detection module (22) having a second trained machine learning model, the 2D feature detection module being configured to detect one or more features on the road portion in a 2D image plane of the obtained image, and to output an image indicative of the detected one or more features;

determine 3D positions of the one or more detected features on the road portion based on the depth map and the image indicative of the detected one or more features.

**13.** The system (10) according to claim 12, wherein the first trained machine learning model is a trained deep neural network configured to output a parametrized 3D road surface representation in the form of a height map based on the obtained image; and

wherein the control circuitry (11) is further configured to:

process the obtained image using the trained deep neural network in order to obtain a height map of the road portion; and

render a z-buffer of the height map of the road portion based on a position and orientation of the camera (6c) relative to the height map of the road portion; and

form the depth map of the road portion based on the rendered z-buffer.

**14.** The system (10) according to claim 12, wherein the first machine learning model is a trained Variational Autoencoder (VAE) configured to output the depth map of the road portion based on the obtained image.

**15.** A vehicle (1) comprising:

an Automated Driving System for controlling the vehicle;

a monocular camera (6c) configured to capture images of a surrounding environment of the vehicle;

a system (10) according to any one of claims 12 - 14.

S100

---

**S101**
Obtain image from on board camera

---

**S102**
Process image through 3D road shape module

**S103**
Process image through 2D feature detection module

---

**S104**
Determine 3D positions of the detected features

---

**S105**
Use 3D positions of the detected features as input to ADS function

---

Fig. 1

S102
Process image through 3D road shape module

S106
Use image as input to DNN in order to obtain height map

S107
Render z-buffer of the height map

S108
Form depth map

## Fig. 2

53    51

Ego-road
segmentation

Backproject
ego-road

52

Depthmap

56    54    53    56

55    57

## Fig. 3

S102
Process image through 3D road shape module

S109
Use image as input to VAE in order to obtain depth map

# Fig. 4

Input

63
Code

Output

61
Encoder

62
Decoder

# Fig. 5

EP 4 266 261 A1

Fig. 6

Fig. 7

EP 4 266 261 A1

# EP 4 266 261 A1

Europäisches Patentamt
European Patent Office
Office européen des brevets

## EUROPEAN SEARCH REPORT

**Application Number**

EP 22 16 9510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/218979 A1 (KWON JUNGHYUN [US] ET AL) 9 July 2020 (2020-07-09) * paragraphs 3, 51, 53, 84, 96, 112, 121-123, 143, 164; figures 1, 5A, 8A-B and 9; * ----- | 1-12,15 | INV. G06V10/774 G06V20/58 G06V20/56 G06V20/64 G06V10/80 |
| A | PAPADOPOULOS SOTIRIOS ET AL: "Neural vision-based semantic 3D world modeling", 2021 IEEE WINTER CONFERENCE ON APPLICATIONS OF COMPUTER VISION WORKSHOPS (WACVW), IEEE, 5 January 2021 (2021-01-05), pages 181-190, XP033905050, DOI: 10.1109/WACVW52041.2021.00024 [retrieved on 2021-04-16] * abstract and section 2.1 * ----- | 2,9 | |
| A | Anonymous: "Z-buffering – Wikipedia", , 18 December 2021 (2021-12-18), XP055965547, Retrieved from the Internet: URL:https://en.wikipedia.org/w/index.php?title=Z-buffering&oldid=1060971831 [retrieved on 2022-09-27] * the whole document * ----- | 9 | TECHNICAL FIELDS SEARCHED (IPC) G06V |
| A | YU HUANG ET AL: "Autonomous Driving with Deep Learning: A Survey of State-of-Art Technologies", ARXIV.ORG, CORNELL UNIVERSITY LIBRARY, 201 OLIN LIBRARY CORNELL UNIVERSITY ITHACA, NY 14853, 11 June 2020 (2020-06-11), XP081694770, * section IV.F * ----- | 9,10 | |

The present search report has been drawn up for all claims

| Place of search | Date of completion of the search | Examiner |
|---|---|---|
| The Hague | 28 September 2022 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 16 9510**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-09-2022**

| Patent document cited in search report | | Publication date | Patent family member(s) | | Publication date |
|---|---|---|---|---|---|
| US 2020218979 | A1 | 09-07-2020 | US | 2020218979 A1 | 09-07-2020 |
| | | | US | 2022019893 A1 | 20-01-2022 |
| | | | US | 2022253706 A1 | 11-08-2022 |

EPO FORM P0459